Europäisches Patentamt

European Patent Office

Office européen des brevets

(19)

(11) **EP 1 381 225 A2**

(12) **EUROPEAN PATENT APPLICATION**

(43) Date of publication:
**14.01.2004 Bulletin 2004/03**

(51) Int Cl.⁷: **H04N 5/14**

(21) Application number: **03011638.8**

(22) Date of filing: **22.05.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **09.07.2002 KR 2002039579**

(71) Applicant: **SAMSUNG ELECTRONICS CO., LTD.**
**Suwon-City, Kyungki-do (KR)**

(72) Inventor: **Kim, Moon-cheol**
**Giheung-eub, Youngin-city, Gyunggi-do (KR)**

(74) Representative: **Grünecker, Kinkeldey,**
**Stockmair & Schwanhäusser Anwaltssozietät**
**Maximilianstrasse 58**
**80538 München (DE)**

(54) **Scene change detector and method thereof**

(57)     A scene change detector includes first and second frame buffers individually storing two image frame data to detect a scene change, a first and a second color space conversion units converting the image frame data stored in the first and second frame buffers into predetermined first and second color signals and outputting the first and second color signals to first and second histogram detection units, respectively, first and second histogram detection units calculating histograms from the color signals converted at first and second color space conversion units, a cross correlation coefficient calculation unit calculating a correlation value between a first histogram calculated at the first histogram detection unit and a second histogram calculated at the second histogram detection unit, and a decision unit outputting a scene change signal by comparing a value calculated at the cross correlation coefficient calculation unit with a predetermined threshold. Accordingly, the scene change can be detected by using the histograms from the color signals.

FIG.1

**Description**

CROSS-REFERENCE TO RELATED APPLICATIONS

This application claims the benefit of Korean Patent Application No. 2002-39579, filed July 9, 2002, in the Korean Intellectual Property Office, the disclosure of which is incorporated herein by reference.

BACKGROUND OF THE INVENTION

1. Field of the Invention

The present invention relates to a scene change detector and a method thereof, and more particularly, to a scene change detector and a method of detecting a scene change between motion pictures by using co-relation information between histograms with respect to color signals of chroma or luminance.

2. Description of the Related Art

Generally, a scene change represents that a motion picture changes from one scene to another scene in consecutive scenes (screen pictures) after the one scene is finished. The scene change is generally divided into several modes: a fade-out and fade-in mode that a certain scene is gradually disappeared and another scene is slowly shown, an overlap mode that two certain scenes are overlapped slowly from different directions for a certain time interval, and a simple scene change mode.
A scene change detector is an apparatus detecting the scene change of the motion picture and can be applied to digital TVs, a computer-based image processing system, and an MPEG signal processing system.
For instance, by adapting scene change detection of the scene change detector to improve a contrast of an image for a digital TV and the like, flickering or panning phenomena occurring on the contrast of the image can be appropriately coped with.
For the MPEG signal processing system, an interframe coding technique using motion prediction and compensation is adapted to compress data that is closely related on an axis of time. When the scene change occurs between scenes of the motion picture, a frequency of redundancy of same image data is low, thereby causing an amount of the data to be increased. Therefore, when the MPEG signal processing system is performed without reflecting special picture effects like the scene change, a rate of bit utilization is lowered and a quality of the motion picture deteriorates, thus it is necessary to perform the scene change detection before signal processing of the motion picture.
There have been several techniques developed for the scene change detector and a method thereof to detect the scene change between scenes of the motion picture.
For example, US Patent No. 6,049,363 entitled "Object detection method and system for scene change analysis in TV and IR data" discloses a pixel difference method based on information of edges of two frames for scene change detection.
US Patent No. 5,032,905 entitled "Accurate detection of a drastic change between successive pictures" discloses a frame difference method applied between two frames for scene change detection.
US patent No. 5,835,663 entitled "Apparatus for recording image data representative of cuts in a video signal" discloses another method of a scene change detection in that a histogram with respect to a chroma color signal of each sub block is obtained after two frames are divided into sub blocks, wherein correlation information is calculated to be statistically processed through a total comparison of the sub blocks.
These conventional scene change detectors and the methods thereof as described above, use algorithms based on motion vectors or a frame difference method. These algorithms have disadvantages of a slow processing speed due to complexities of architectures thereof. Therefore, these methods are not so effective when motion information in image frames is not very important, like in cases of improving the contrast or color of images.
Moreover, the conventional scene change detectors and the methods thereof cannot provide an effective method to improve the quality of the moving picture by detecting TI ("Title Insertion"), that is a subtitle displayed on the moving picture, or PIP ("Picture in Picture"), that is, another picture displayed in the moving picture to be considered together with the scene change.

SUMMARY OF THE INVENTION

The present invention has been made to overcome the above and/ other problems of the related art. Accordingly, it is the aspect of the present invention to provide a scene change detector and a method thereof which can be used when motion information in an image frame is not significant such as a case of improving a contrast of a picture in the image frame.

Another aspect of the present invention is to provide a scene change detector and method capable of improving a quality of a picture when there is TI (Title Insertion) or PIP (Picture In Picture) by considering a scene change.

Additional aspects and advantages of the invention will be set forth in part in the description which follows and, in part, will be obvious from the description, or may be learned by practice of the invention.

A scene change detector according to an aspect of the present invention includes first and second histogram detection units individually calculating first and second histograms with respect to predetermined input first and second color signals, a cross correlation coefficient calculation unit calculating a correlation value between the first and second histograms calculated from the first and the second histogram detection units respectively, and a decision unit outputting a scene change signal by comparing the correlation value with a predetermined threshold.

According to another aspect of the invention, the scene change detector further includes first and second frame buffers storing two image frame data to detect the scene change, respectively, and first and second color space conversion units converting the image frame data stored in the first and the second frame buffers into the predetermined first and second color signals and outputting the predetermined first and second color signals to the first and the second histogram detection units, respectively.

The predetermined first and second color signals are luminance color signals or chroma color signals. It is possible that the first and the second histogram detection units quantize the respective ones of the input color signals to a predetermined signal band, calculate the number of pixels having the same value of the quantized input color signal with respect to all pixels in a predetermined frame, and calculate the first and the second histograms by standardizing the calculated number. It is possible that the decision unit outputs the scene change signal when the correlation value is less than the predetermined threshold which is in a range of 0.9 to 0.95.

According to another aspect of the invention, a scene change detector includes first and second histogram detection units individually calculating histograms with respect to predetermined input first and second color signals, first and second average/maximum calculation units individually calculating average values and maximum values from the first and the second histograms calculated at the first and the second histogram detection units, respectively, a comparison unit outputting an average signal by comparing a first difference between the first and the second average values calculated from the first and the second average/maximum calculation units with a predetermined first threshold, respectively, and a maximum signal by comparing a second difference between the first and the second maximum values calculated from the first and the second average/maximum calculation units with a predetermined second threshold, first and second filters individually outputting first and second histograms having suppressed respective peak values by filtering the first and the second histograms, a cross correlation coefficient calculation unit calculating a correlation value between the filtered first and second histograms, and a decision unit outputting a scene change signal by comparing the correlation value with a predetermined third threshold and a TI signal and a PIP signal based on the scene change signal and the average signal and the maximum signal output from the comparison unit .

It is possible that the scene change detector further includes first and second frame buffers individually storing two image frame data to detect the scene change signal, and first and second color space conversion units to convert the image frame data stored in the first and the second frame buffers into the predetermined first and the second color signals and output the converted first and the second color signals to the first and the second histogram detection units, respectively.

It is possible that the predetermined first and the second color signals are luminance color signals or chroma color signals.

It is possible that the first and the second histogram detection units quantize the respective input color signals to a predetermined signal band, calculate the number of pixels having the same value of quantized color signal from the quantized input color signals with respect to all pixels in a predetermined frame, and calculate the first and the second histograms by standardizing the calculated number, respectively.

It is possible that the decision unit outputs the scene change signal when the correlation value is less than the predetermined third threshold which is in a range of 0.9 to 0.95.

It is possible that the comparison unit outputs the average signal when the difference between the first and the second average values are greater than the predetermined first threshold, and outputs the maximum signal when the difference between the first and the second maximum values are greater than the second threshold.

Furthermore, it is possible that the decision unit receives the average signal and the maximum signal, and outputs the TI signal and the PIP signal when the scene change signal is greater than the predetermined first threshold.

According to another aspect of the invention, a method of scene detecting includes calculating first and second histograms with respect to predetermined input first and second color signals, calculating a correlation value between the first and the second histograms, and outputting a scene change signal when the correlation value is less than a predetermined threshold.

It is possible that the method of scene detecting further includes individually storing two image frame data to detect the scene change signal and converting the image frame data into the predetermined first and second color signals, respectively.

According to another aspect of the invention, a method of scene detecting includes individually calculating first and second histograms with respect to input predetermined first and second color signals, calculating first and second average values and first and second maximum values from the first and the second histograms, outputting an average signal when a first difference between the calculated first and second average values is greater than a predetermined first threshold, and outputting a maximum signal when a second difference between the first and the second maximum values is greater than a predetermined second threshold, filtering the first and the second histograms to limit peak values and individually output the filtered first and second histograms, calculating a correlation value between the filtered first and second histograms, outputting a scene change signal when the correlation value is less than a predetermined third threshold, inputting the average signal and the maximum signal, and outputting a TI signal or a PIP signal when the correlation value is greater than the predetermined third threshold.

It is possible that the method of scene detecting of the present invention further includes individually storing two image frame data to detect the scene change signal and converting the image frame data into the predetermined first and second color signals.

BRIEF DESCRIPTION OF THE DRAWINGS

These and/or other aspects and advantages of the invention will become apparent and more readily appreciated from the following description of the preferred embodiments, taken in conjunction with the accompanying drawings of which:

FIG. 1 is a block diagram showing a scene change detector according to an embodiment of the present invention;
FIG. 2 is a flow chart showing an operation method of the scene change detector of FIG. 1;
FIGS. 3A and 3B are views showing histograms generated in the scene change detector of FIG. 1;
FIG. 4 is a block diagram showing a scene change detector according to another embodiment of the present invention; and
FIGS. 5A and 5B are views showing histograms generated in the scene change detector of FIG. 4.

DETAILED DESCRIPTION OF THE PREFERRED EMBODIMENTS

Reference will now be made in detail to the present preferred embodiments of the present invention, examples of which are illustrated in the accompanying drawings, wherein like reference numerals refer to the like elements throughout. The embodiments are described in order to explain the present invention by referring to the figures.

Hereinbelow, the present invention will be described in greater detail by referring to the appended drawings.

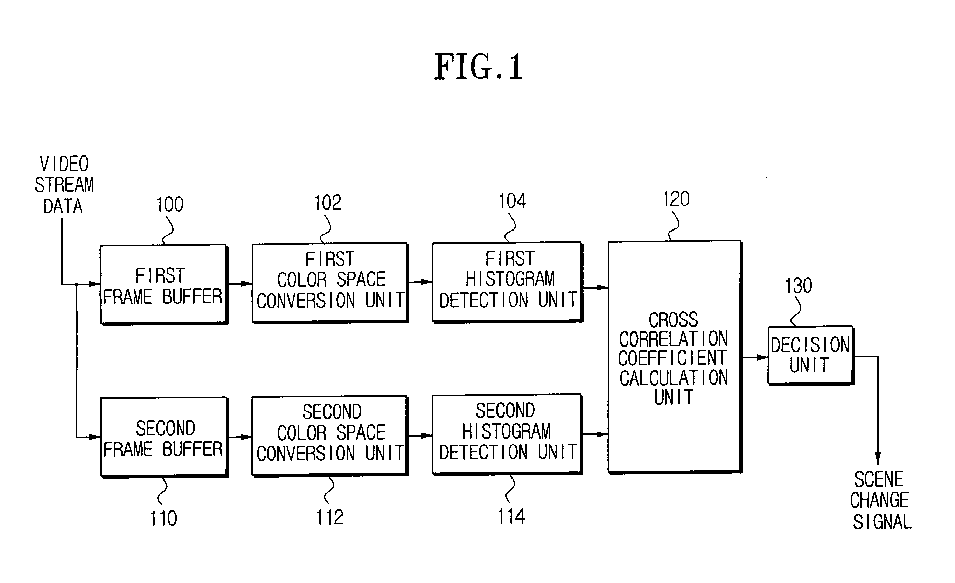

FIG. 1 is a block diagram showing a scene change detector according to an embodiment of the present invention.

The scene change detector includes a first frame buffer 100, a first color space conversion unit 102, a first histogram detection unit 104, a second frame buffer 110, a second color space conversion unit 112, a second histogram detection unit 114, a cross correlation coefficient calculator 120, and a decision unit 130.

Referring to FIG. 1, the first frame buffer and the second frame buffer 100 and 110 individually store two image frame data having a predetermined temporal interval to detect a scene change from input video stream data. The first and second color space conversion units 102 and 112 individually convert respective color spaces of the image frame data stored in the first and the second frame buffers 100 and 110 into respective color signals. The first and the second histogram detection units 104 and 114 individually calculate first and second histograms from the color signals converted at the first and the second color space conversion unit 102 and 112.

The cross correlation coefficient calculator 120 calculates a correlation value C between the calculated first and second histograms, and the decision unit 130 compares the calculated correlation value C with a predetermined threshold and outputs a scene change signal.

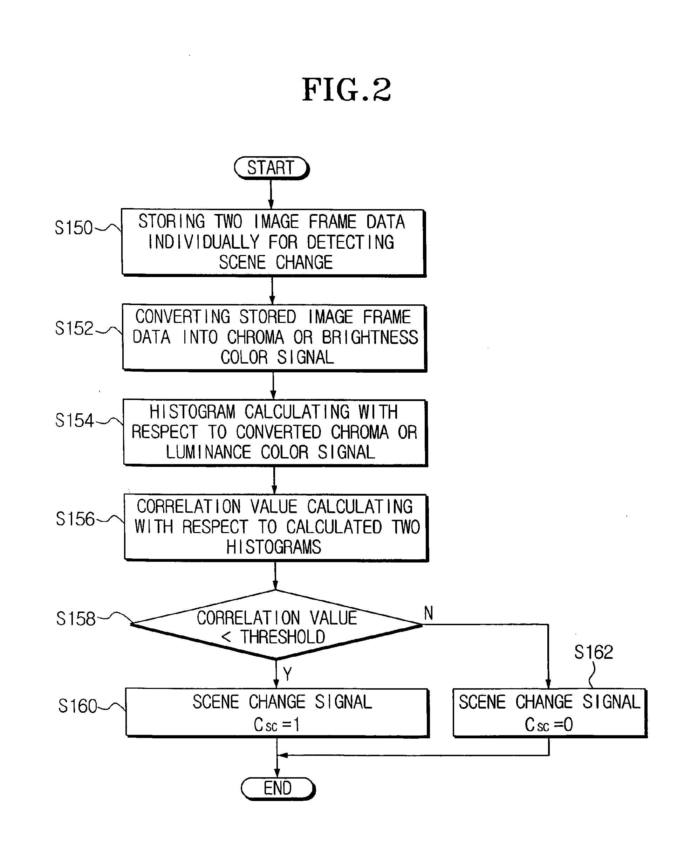

FIG. 2 is a flow chart showing an operation method of the scene change detector of FIG. 1. Referring to FIG. 2, two image frame data having a predetermined temporal interval are respectively stored into the first and the second frame buffers 100 and 110 to detect a scene change from input video stream data in operation S150. The color spaces of the image frame data stored in the first and the second frame buffers 100 and 110 are converted at the first and the second color space conversion units 102 and 112 into chroma (or luminance) color signals in operation S152. In other words, the frame image data stored into the first and the second frame buffers 100 and 102 can have the color spaces, such as RGB, YIQ, YUV, YcbCr, or HLS based on a utility environment. These color spaces are converted into chroma (or luminance) color signals by using appropriate equations. For example, a calculation of the chroma (or luminance) color signal from an RGB color signal can be operated using the following equation 1.

Equation 1

$$Y = a \cdot R + b \cdot G + c \cdot B$$

$$S = \frac{Max[R,G,B] - Min[R,G,B]}{Max[R,G,B]}$$

Here, a, b, and c are conversion coefficients. For reference, according to the recommendation 601-1 of CCIR ( International Radio Consultative Committee), a = 0.29900, b = 0.58700 and c = 0.1140. They are typical conversion coefficients used for JPEG compressing.

The first and the second histogram detection units 104 and 114 individually calculate the histograms from the chroma (or luminance) color signals converted at the first and the second color space conversion units 102 and 112 in operation S154 . At this time, one of the histograms calculated at the first histogram calculation unit 104 is a first histogram, and the other one of the histograms calculated at the second histogram calculation unit 114 is a second histogram. The method of calculating the first and the second histograms is as follows. The chroma (or luminance) color signals converted from the respective color spaces by the first and the second color space conversion units 102 and 112 are quantized to a predetermined signal band, such as 0~100 scales, 0~127 scales, or 0-255 scales, and each histogram is calculated to count the number of values having the same value with respect to a selected local window or entire pixels of an image frame or field. After a maximum value is searched in the histogram, the histogram is calculated by normalizing to allow the maximum value to have a certain value (for example, 100).

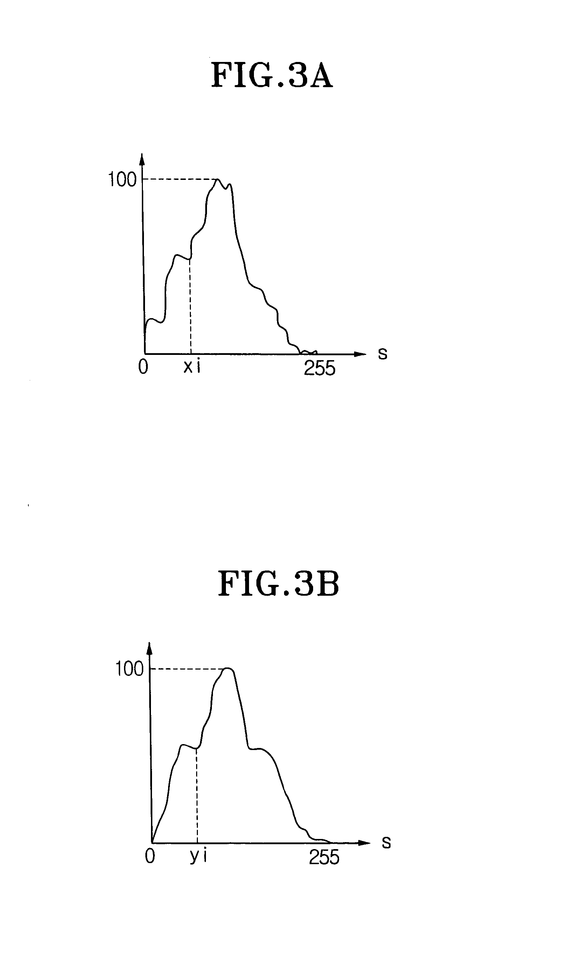

FIGS. 3A and 3B are views of the first and the second histograms calculated based on the above method. The shown histograms have the signal band of 0~255 and the maximum value of 100. In other words, an axis X is the signal band of 0~255, and an axis Y corresponding to each axis X is a counted value of the number of the pixels having the same value.

The cross correlation coefficient calculation unit 120 calculates the correlation value C by using the following equation between the first histogram calculated at the first histogram calculation unit 104 and the second histogram calculated at the second histogram calculation unit 114 in operation S156.

Equation 2

$$C = \sum \frac{(x_i - \bar{x})(y_i - \bar{y})}{\sqrt{\sum_{\forall i}(x_i - \bar{x})^2}\sqrt{\sum_{\forall i}(y_i - \bar{y})^2}}$$

Here, $x_i$ is a predetermined value on the axis X of the first histogram calculated at the first histogram calculation unit 104, and $y_i$, is a predetermined value on the axis X of the second histogram calculated at the second histogram calculation unit 114. $\bar{x}$ is an average value of individual histogram counters of the first histogram, and $\bar{y}$ is an average value of individual histogram counters of the second histogram.

The correlation value C calculated by the equation 2 has a value between -1 and 1. When the first histogram is orthogonal to the second histograms, the correlation value C is -1. When a correlation degree between the first histogram and the second histogram becomes stronger, then the correlation value C is close to 1. When the correlation value C is 1, it is determined that the first histogram and the second histogram are the same.

The decision unit 130 creates a scene change signal $C_{sc}$ by comparing the correlation value C calculated at the equation 2 with the predetermined threshold. In other words, when the correlation value C is less than the predetermined threshold, it can be regarded that the scene change is generated. An experimentally calculated threshold is 0.9 to 0.95. Therefore, when the correlation value C is less than 0.9 to 0.95, it is determined that there exists the scene change, thus the scene change signal $C_{sc}$ is output as 1. When the correlation value C is greater than 0.9 to 0.95, the scene change signal $C_{sc}$ is 0.

As described so far, even when there is a movement in the image frame after detecting the scene change by using correlation information between chroma (or luminance) histograms without using motion information, it is not determined that there exists the scene change.

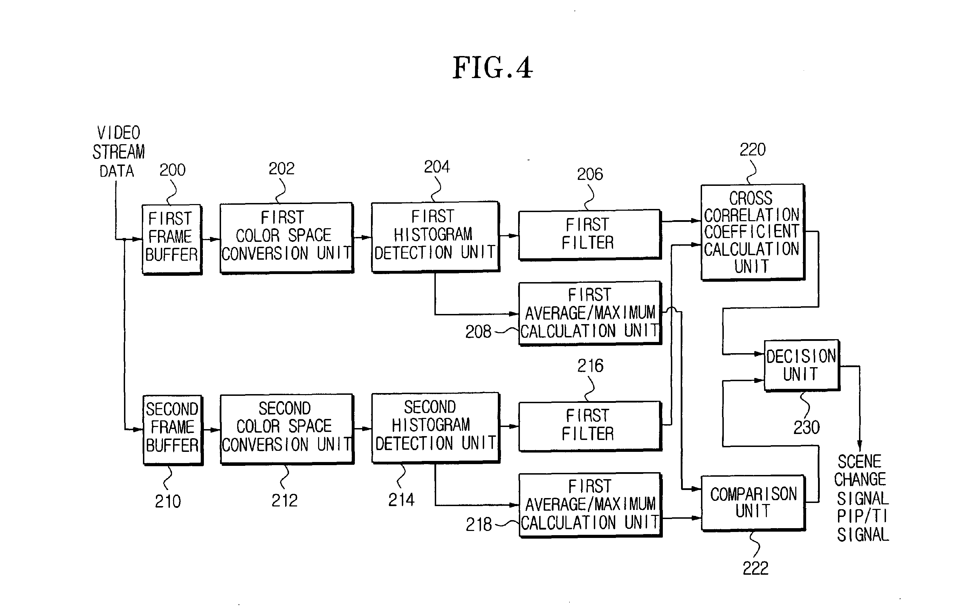

FIG. 4 is a block diagram showing another scene change detector according to another embodiment of the present invention. Referring to the block diagram of FIG. 4, the scene change detector includes a first frame buffer 200, a first color space conversion unit 202, a first histogram detection unit 204, a first filter 206, a first average/maximum calculation unit 208, a second frame buffer 210, a second color space conversion unit 212, a second histogram detection unit 214, a second filter 216, a second average/maximum calculation unit 218, a cross correlation coefficient calculation unit 220, a comparison unit 222, and a decision unit 230.

As shown in the block diagram of FIG. 4, the scene change detector has more additional blocks, such as the first and the second filters 206 and 216, the first and the second average/maximum calculation units 208 and 218, and the comparison unit 222 than those of the scene change detector of FIG. 1. These additional blocks are used to detect mainly a picture-in-picture (PIP) signal or a title insertion (TI) signal.

Respective functions of the first and the second frame buffers 200 and 210, the first and the second color space conversion units 202 and 212, the first and the second histogram detection units 204 and 214, and the cross correlation coefficient calculation unit 220 are the same as those of the scene change detector of FIG. 1. Therefore, hereinbelow, functions of the additional blocks will be described.

The first and the second average/maximum calculation units 208 and 218 individually calculate an average value and a maximum value with respect to first and second histograms calculated at the first and the second histogram detection units 204 and 214. The average value and the maximum value calculated from the first histogram at the first average/maximum calculation unit 208 are a first average value and a first maximum value, respectively, and the average value and the maximum value calculated from the second histogram at the second average/maximum calculation unit 208 are a second average value and a second maximum value, respectively.

The first and the second average values and the first and the second maximum values calculated at the first and the second average/maximum calculation units 208 and 218 are transmitted to the comparison unit 222. The comparison unit 222 calculates an average signal $C_{mean}$ and a maximum signal $C_{max}$ based on the following equations.

Equation 3

$$\Delta S_{max} =| S_{max} (T - \Delta T) - S_{max} (T)|$$

$$,if \; \Delta S_{max} < Th1 \; then \; C_{max} =0 \; ,else \; C_{max} =1$$

Equation 4

$$\Delta S_{mean} = S_{mean} (T - \Delta T) - S_{mean} (T)|$$

$$,if \; \Delta S_{mean} < Th2 \; then \; C_{mean} =0 \; ,else \; C_{mean} =1$$

Here, $\Delta T$ is a predetermined temporal interval, and thus $S_{max} (T - \Delta T)$ and $S_{max} (T)$ are the maximum values of the first and the second histograms, respectively. The case of the average values of the first and the second histograms is the same as described above.

The average signal $C_{mean}$ and the maximum signal $C_{max}$ calculated at the comparison unit 230 are transmitted to the decision unit 230.

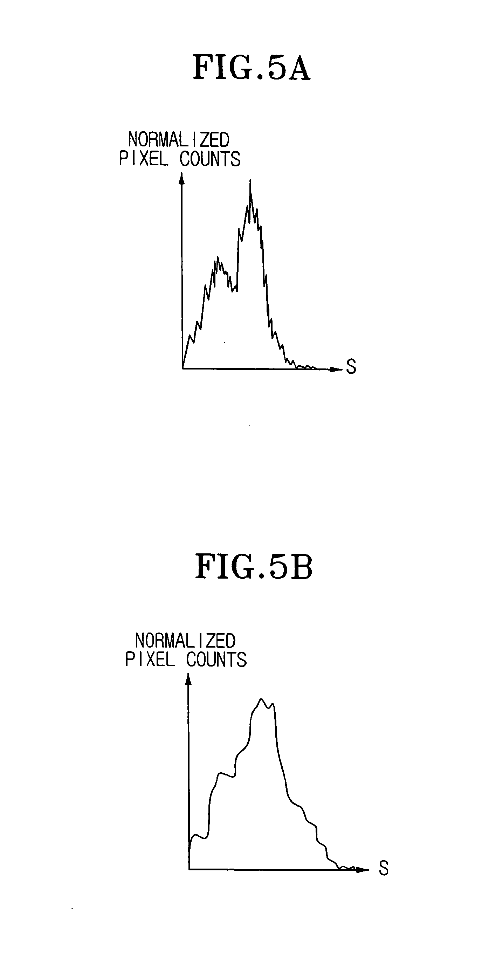

In the meantime, the first and the second filters 206 and 216 reduce a peak value of the respective histograms formed by the TI signal or the PIP signal by using a linear or a non-linear filter. For example, FIG. 5A shows a histogram formed by the TI or PIP signal, and FIG. 5B shows another histogram formed by the signals passing through the first filter 206 or the second filter 216. As shown in FIGS. 5A and 5B, the peak value of the signals is limited when the signals pass through the first and the second filters 206 and 216. Using the first and the second filters 206 and 216 limiting the peak value occurring due to the PIP or TI signal, even when the PIP and TI signals are generated, the scene change signal Csc is prevented from being unconditionally output.

The first and the second filters 206 and 216 are a linear low pass filter or a non-linear medial filter.

The following equation is an example of an output histogram value with respect to an input histogram value calculated by using a 5-Tab median filter.

Equation 5

$$F_{out}(i) = Median[F_{input}(i-2), F_{input}(i-1), F_{input}(i), F_{input}(i+1), F_{input}(i+2)]$$

Here, $F_{input}(i)$ is the input histogram value, and $F_{out}(i)$ is the output histogram value. A median operator is a filtering method to take a medium value by rearranging given histogram values by their magnitudes. Once a histogram is finished its filtering, the maximum value is set, and the maximum value is standardized to a predetermined value (for example, 100).

The standardized histogram is transmitted to the cross correlation coefficient calculation unit 220. The cross correlation coefficient calculation unit 220 calculates the correlation value C by using the equation 2 explained above. The calculated correlation value C is transmitted to the decision unit 230.

The decision unit 230 creates the scene change signal Csc and the PIP (picture in picture)/TI (title insertion) signals CTI/P based on the following signal by using the correlation value C, the average signal $C_{mean}$ and the maximum signal $C_{max}$.

Equation 6

$$If\ (C \leq Th3)\ then\ C_{sc} = 1,\ else\ C_{SC} = 0$$

$$If\ ((C_{mean} = 1\ or\ C_{max} = 1)\ AND\ C > Th3)\ then\ C_{TI/P} = 1,\ else\ C_{TI/P} = 0$$

In other words, when the correlation value C is less than a threshold, it is a case of a general scene change. In this case, the scene change signal Csc is output as 1. When $C_{max}$ or $C_{mean}$ is 1 there is a significant change in preceding and following images, and at the same time, the correlation value C is greater than the threshold, then it is determined that the TI or PIP exists.

As described so far, since the fact that the scene change is a general change or it is caused by the TI or PIP can be detected, an improvement of a quality of a picture can be effectively performed by using the above information for the improvement of contrast of an image signal to appropriately cope with the above problems.

According to the present invention, the scene change unrelated to the movement in the image frame can be detected by using correlation information between histograms of chroma or luminance color signal. Moreover, the quality of the picture can be more effectively improved since the scene change by the TI or PIP and the general scene change can be separated from each other.

Although the preferred embodiments of the present invention have been described, it will be understood by those skilled in the art that the present invention should not be limited to the described preferred embodiments, but various exchanges and modifications can be made within the spirit and the scope of the present invention. Accordingly, the scope of the present invention is not limited within the described range but the following claims and their equivalents.

**Claims**

**1.** A scene change detector comprising:

first and second histogram detection units computing histograms from input first and second color signals, respectively;
i a cross correlation coefficient calculation unit calculating a correlation value between the first and second histograms computed by the first and second histogram detection units, respectively; and
a decision unit outputting a scene change signal by comparing the correlation value with a threshold.

2. The scene change detector according to claim 1, further comprising:

   first and second frame buffers storing two image frame data, respectively, to detect a scene change; and
   first and second color space conversion units converting the image frame data stored in the first and second frame buffers into the first and second color signals to be outputted to the first and second histogram detection units, respectively.

3. The scene change detector according to claim 2, wherein the first and second color signals are luminance color signals.

4. The scene change detector according to claim 2, wherein the first and second color signals are chroma color signals.

5. The scene change detector according to claim 1, wherein the first and second histogram detection units quantize the input first and second color signals to signal bands, respectively, each calculate the number of pixels having the same values of the quantized first and second color signals with respect to all pixels in a predetermined frame region, and calculate the first and second histograms by standardizing the calculated respective numbers, respectively.

6. The scene change detector according to claim 1, wherein the decision unit outputs the scene change signal when the correlation value is less than the threshold.

7. The scene change detector according to claim 6, wherein the threshold is in a range of 0.9 to 0.95 inclusive.

8. A scene change detector comprising:

   first and second histogram detection units calculating first and second histograms from input first and second color signals, respectively;
   first and second average/maximum calculation units calculating average values and maximum values from the first and second histograms calculated at the first and second histogram detection units, respectively;
   a comparison unit outputting an average signal by comparing a first difference between the first and second average values calculated from the first and second average/maximum calculation units, respectively, with a first threshold, and a maximum signal by comparing a second difference between the first and second maximum values calculated from the first and second average/maximum calculation units, respectively, with a second threshold;
   first and second filters filtering the first and second histograms to output the filtered first and second histograms having suppressed peak values, respectively;
   a cross correlation coefficient calculation unit calculating a correlation value between the filtered first and second histograms; and
   a decision unit outputting a scene change signal by comparing the correlation value with a third threshold, and a TI (Title Insertion) or PIP (Picture In Picture) signal based on the scene change signal and the average signal and the maximum signal output from the comparison unit .

9. The scene change detector according to claim 8, further comprising

   first and second frame buffers storing two image frame data to detect a scene change; and
   first and second color space conversion units converting the image frame data stored in the first and second frame buffers into the first and second color signals and outputting the first and second color signals to the first and second histogram detection units, respectively.

10. The scene change detector according to claim 9, wherein the first and second color signals are luminance color signals.

11. The scene change detector according to claim 9, wherein the first and second color signals are chroma color signals.

12. The scene change detector according to claim 8, wherein the first and second histogram calculation units quantize the input first and second color signals to respective signal bands, each calculate the number of pixels having the same values of the quantized first and second color signals with respect to all pixels in respective frame regions, and calculate the first and second histograms by standardizing the calculated respective numbers, respectively.

13. The scene change detector according to claim 8, wherein the decision unit outputs the scene change signal when the correlation value is less than the third threshold.

14. The scene change detector according to claim 8, wherein the third threshold is in a range of 0.9 to 0.95 inclusive.

15. The scene change detector according to claim 13, wherein the comparison unit outputs the average signal when the difference between the first and second average values is greater than the first threshold, and the maximum signal when the difference between the first and second maximum values is greater than the second threshold.

16. The scene change detector according to claim 8, wherein the decision unit receives the average signal and the maximum signal and outputs the TI or PIP signal when the scene change signal is greater than the first threshold.

17. A method of detecting a scene change, the method comprising:

computing first and second histograms with respect to input first and second color signals, respectively;
calculating a correlation value between the first and second histograms; and
outputting a scene change signal when the correlation value is less than a threshold.

18. The method according to claim 17, wherein the computing of the first and second histograms comprises:

storing two image frame data separately to detect the scene change; and
converting the stored two frame data into the first and second color signals.

19. A method of detecting a scene change, the method comprising:

computing first and second histograms with respect to input first and second color signals;
calculating first and second average values and first and second maximum values from the first and second histograms, respectively;
outputting an average signal when a first difference between the calculated first and second average values is greater than a first threshold, and outputting a maximum signal when a second difference between the first and second maximum values is greater than a second threshold;
filtering the first and the second histograms to output the filtered first and second histograms having suppressed peak values;
calculating a correlation value between the filtered first and second histograms; and
outputting a scene change signal when the correlation value is less than a third threshold, and outputting a TI or PIP signal when the correlation value is greater than the third threshold with the average and maximum signals being inputted thereto.

20. The method according to claim 19, wherein the computing of the first and second histograms comprises:

storing two image frame data separately to detect the scene change; and
converting the stored two image frame data into the first and second color signals.

21. A scene change detector comprising:

first and second histogram detection units each computing each number of respective pixels having the same value from first and second video signals, respectively; and
a decision unit outputting a scene change signal in accordance with the number of the pixels of each of the first and second video signals.

22. The scene change detector according to claim 21, wherein the first and second video signals have a temporal interval in video stream data.

23. The scene change detector according to claim 21, wherein the first and second video signals comprise:

one of an RGB type signal, a YIQ type signal, a YUV type signal, a YcbCr type signal, and an HLS type signal.

**24.** The scene change detector according to claim 21, further comprising:

first and second memories storing the first and second video signals, respectively.

**25.** The scene change detector according to claim 21, further comprising:

first and second memories storing first and second image frame/field data of video stream data corresponding to the first and second video signals, respectively.

**26.** The scene change detector according to claim 25, further comprising:

first and second color space conversion units converting the stored first and second image frame/field data of video stream data into the first and second video signals, respectively.

**27.** The scene change detector according to claim 21, wherein the first and second histogram detection units compute first and second histograms representing respective numbers of the respective pixels having the same value from first and second video signals, respectively.

**28.** The scene change detector according to claim 27, wherein each of the first and second histograms comprises:

first numbers each representing the number of the pixels having the same value; and
second numbers each representing the number of the pixels having different values.

**29.** The scene change detector according to claim 28, wherein decision unit outputs the scene change signal in accordance with the first numbers and the second numbers.

**30.** The scene change detector according to claim 27, further comprising:

a cross correlation coefficient calculation unit calculating a correlation value between the first and the second histograms, wherein the decision unit outputs the scene change signal upon comparing the correlation value with a threshold.

**31.** The scene change detector according to claim 21, further comprising:

first and second filters filtering the respective numbers of the pixels having the same value to suppress one of the respective numbers of the pixels which is greater than a peak value, respectively.

**32.** The scene change detector according to claim 21, wherein the first and second histogram detection unit computes another number of the respective pixels having different values, respectively, and the decision unit outputs the scene change signal in accordance with the number and the another number of the pixels of each of the first and second video signals.

**33.** The scene change detector according to claim 21, wherein the first and second histogram detection units compute another number of the respective pixels having different values, respectively, the number and the another number of the pixels are normalized in first and second ranges, respectively, and the decision unit outputs the scene change signal in accordance with the normalized number and the normalized another number of the pixels.

**34.** The scene change detector according to claim 21, wherein the first and second histogram detection units compute another number of the respective pixels having different values, and the detector further comprises:

first and second average/maximum calculation units calculating first and second average signals and first and second maximum signals from the number of the pixels, respectively.

**35.** The scene change detector according to claim 34, wherein the decision unit outputs the scene change signal in accordance with the first and second average signals and the first and second maximum signals of the first and second average/maximum calculation units.

36. The scene change detector according to claim 34, wherein the number and the another number of the pixels are normalized in first and second ranges, respectively.

37. The scene change detector according to claim 36, wherein the first range is N times of a scale between 1 and 100 inclusive, and N is a positive number.

38. The scene change detector according to claim 36, wherein the second range is N times of a scale between 0 and 255, inclusive, and N is a positive number.

39. The scene change detector according to claim 34, wherein the number of the pixels has a maximum number of 100 when the number of the pixels is in a scale between 1 and 100 inclusive.

40. The scene change detector according to claim 34, wherein the another number of the pixels has a maximum number of 255 when the number of the pixels is in a scale between 0 and 255 inclusive.

41. The scene change detector according to claim 21, wherein the respective pixels have one of a second number of different values, and the detector further comprises:

    a cross correlation coefficient calculation unit calculating a correlation value between the first and second video signals in the respective numbers of the respective pixels corresponding to the second number of different values.

42. The scene change detector according to claim 41, wherein the decision unit outputs the scene change signal upon comparing the correlation value with a threshold.

43. The scene change detector according to claim 42, wherein the scene change signal represents that there is a scene change between the first and second video signals, when the correlation value is less than a threshold.

44. The scene change detector according to claim 42, wherein the scene change signal represents that there is a title insertion signal or a picture-in-picture signal in the first and second video signals, when the correlation value is greater than a threshold.

45. The scene change detector according to claim 21, wherein the respective pixels are a portion of or all pixels forming a frame or field corresponding the first and second video signals, respectively.

46. A scene change detector comprising:

    first and second histogram detection units forming correlation information between histograms of a chroma or luminance color signal and detecting a scene change unrelated to a movement in an image frame from the formed correlation information; and
    a decision unit outputting a scene change signal in accordance with the detected scene change.

47. A method in a scene change detector, the method comprising:

    computing respective numbers of respective pixels having the same value from first and second video signals, respectively; and
    outputting a scene change signal in accordance with the respective numbers of the pixels of the first and second video signals.

48. The method of claim 47, wherein the respective numbers comprises the second number of the pixels having different values, and the computing of the number of the respective pixels comprises:

    calculating a correlation value between the first and second video signals in the respective numbers of the respective pixels corresponding to the second number of different values.

49. The method of claim 47, wherein the outputting of the scene change signal comprises:

    comparing the correlation value with a threshold to output the scene change signal representing one of a scene change and a title insertion or picture-in-picture signal in the first and second video signals.

**50.** A method in a scene change detector, the method comprising:

detecting a scene change unrelated to a movement in an image frame by using correlation information between histograms of a chroma or luminance color signal; and
outputting a scene change signal in accordance with the detected scene change.

# FIG.1

VIDEO
STREAM
DATA

100

FIRST
FRAME BUFFER

102

FIRST
COLOR SPACE
CONVERSION UNIT

104

FIRST
HISTOGRAM
DETECTION UNIT

120

CROSS
CORRELATION
COEFFICIENT
CALCULATION
UNIT

130

DECISION
UNIT

110

SECOND
FRAME BUFFER

112

SECOND
COLOR SPACE
CONVERSION UNIT

114

SECOND
HISTOGRAM
DETECTION UNIT

SCENE
CHANGE
SIGNAL

EP 1 381 225 A2

# FIG.2

START

S150 — STORING TWO IMAGE FRAME DATA INDIVIDUALLY FOR DETECTING SCENE CHANGE

S152 — CONVERTING STORED IMAGE FRAME DATA INTO CHROMA OR BRIGHTNESS COLOR SIGNAL

S154 — HISTOGRAM CALCULATING WITH RESPECT TO CONVERTED CHROMA OR LUMINANCE COLOR SIGNAL

S156 — CORRELATION VALUE CALCULATING WITH RESPECT TO CALCULATED TWO HISTOGRAMS

S158 — CORRELATION VALUE < THRESHOLD

N

Y

S160 — SCENE CHANGE SIGNAL $C_{sc} = 1$

S162 — SCENE CHANGE SIGNAL $C_{sc} = 0$

END

# FIG.3A

# FIG.3B

# FIG.4

VIDEO
STREAM
DATA

| 200 | 202 | 204 | 206 | 220 |
|-----|-----|-----|-----|-----|

FIRST
FRAME
BUFFER
200

FIRST
COLOR SPACE
CONVERSION UNIT
202

FIRST
HISTOGRAM
DETECTION UNIT
204

FIRST
FILTER
206

CROSS
CORRELATION
COEFFICIENT
CALCULATION
UNIT
220

208 — FIRST
AVERAGE/MAXIMUM
CALCULATION UNIT

DECISION
UNIT

230

SECOND
FRAME
BUFFER
210

SECOND
COLOR SPACE
CONVERSION UNIT
212

SECOND
HISTOGRAM
DETECTION UNIT
214

FIRST
FILTER
216

218 — FIRST
AVERAGE/MAXIMUM
CALCULATION UNIT

COMPARISON
UNIT
222

SCENE
CHANGE
SIGNAL
PIP/TI
SIGNAL

16

EP 1 381 225 A2

# FIG.5A

NORMALIZED
PIXEL COUNTS

S

# FIG.5B

NORMALIZED
PIXEL COUNTS

S